Europäisches Patentamt

European Patent Office

Office européen des brevets

(19)

(11) Publication number: **0 179 628**
A2

## (12) EUROPEAN PATENT APPLICATION

(21) Application number: 85307540.6

(22) Date of filing: 18.10.85

(51) Int. Cl.⁴: **C 09 J 3/12**

(30) Priority: 24.10.84 US 664456

(43) Date of publication of application:
30.04.86 Bulletin 86/18

(84) Designated Contracting States:
CH DE FR GB IT LI NL

(71) Applicant: MERCK & CO. INC.
126, East Lincoln Avenue P.O. Box 2000
Rahway New Jersey 07065(US)

(72) Inventor: Chang, Joe H.S.
3027 Garboso Street
Carlsbad California 92008(US)

(74) Representative: Crampton, Keith John Allen et al,
D YOUNG & CO 10 Staple Inn
London WC1V 7RD(GB)

(54) Water-based pressure-sensitive adhesives.

(57) Xanthan gum is used as a rheology modifier for pressure sensitive adhesives, improving their cohesive strength. 0.01 to 2 weight per cent of xanthan gum is added to a composition that also comprises a water-based pressure-sensitive adhesive latex.

EP 0 179 628 A2

## WATER-BASED PRESSURE-SENSITIVE ADHESIVES

Water-based pressure-sensitive adhesives (PSA's), based on polyacrylate latexes, polyvinylacetate-acrylate latexes, polyvinyl acetate-ethylene latexes, or on tackified rubber latexes such as natural rubber and styrene-butadiene, have gained a significant share of the total PSA market for use in tapes, labels and decals, and miscellaneous products. The polymer backbones of these water-based pressure-sensitive latexes containing 2-ethylhexyl acrylate, octyl acrylate or styrene-butadiene depend on functional monomers such as acrylic acid, methacrylic acid and acrylamide, and tackifiers to provide the balance of the critical parameters: tackiness, adhesion, and cohesion for a pressure-sensitive adhesive system. Sodium and ammonium polyacrylate, carboxymethylcellulose (CMC), and hydroxyethyl cellulose (HEC) have been used as thickeners to control the viscosity of these water-based pressure-sensitive latexes; but these do not improve their adhesive properties.

Typically, in PSA's there is an inverse relationship between tackiness and cohesive strength. Thus, the more highly adhesive a PSA is made, the greater its tendency to split and leave a residue if peeled back from a surface.

PSA's are adhesives which in dry (solvent free) form are aggressively and permanently tacky at room temperature and firmly adhere to a variety of dissimilar surfaces upon mere contact without the need of more than finger or hand pressure. They require no activation by water, solvent or heat in order to exert a strong adhesive holding force toward such materials as paper, plastic, glass, wood, cement and metals. They have a sufficiently cohesive holding and elastic nature so that, despite their aggressive tackiness, they can be handled with the fingers and removed from smooth surfaces without leaving a residue.

## SUMMARY OF THE INVENTION

It has now been found that 0.01-2% xanthan gum may be used as a rheological modifier for water-based pressure-sensitive adhesives and that its use improves the cohesive strength and other application properties of these adhesives, particularly of polyacrylates, polyvinylacetate-acrylate, and other latex systems which already possess aggressive tackiness and high peel adhesion.

DETAILED DESCRIPTION

According to this invention, 0.01-2% (preferably, 0.1 to 1%), based on the total weight of the latex, of a xanthan gum is slurried with a small amount of a suitable non-solvent such as alcohol (isopropanol, methanol), glycol (ethylene, propylene, diethylene), or glycol ether (2-ethoxyethanol, 2-butoxyethanol, 2-(2-ethoxyethoxy)ethanol, 2-(2-butoxyethoxy)ethanol), then added to the adhesive latex under agitation. The speed of agitation is increased as the viscosity of the latex increases. Mixing is continued until the viscosity of the latex is fully developed and the thickened latex becomes very smooth.

The thickened latex is then coated onto a backing to make an adhesive tape. A tape backing can be any reasonably thin, flat, and flexible material. These include woven, non-woven, metallic, electrically-resistant, foamy, fluorocarbon, heat-resistant, synthetic (e.g., nylon, mylar, polyethylene, polyester, polypropylene, PVC, etc.), tear-resistant, and water-resistant materials. The techniques for applying liquid latex onto such backings, optionally curing the latex, cutting, rolling, and further preparing said adhesive tapes are well known and will obviously vary with the nature of the latex and the backing material.

It has now been found that the addition of xanthan gum into a water-based pressure-sensitive adhesive system improves its shear resistance at room temperature and at elevated temperature, and minimizes the undesirable transfer of the aggressive PSA to another substrate. Therefore, the addition of xanthan gum into a water-based pressure-sensitive adhesive system improves its cohesive strength, which result cannot be obtained with CMC, HEC, sodium polyacrylate, alginates, or other rheological modifiers.

By xanthan gum is meant a class of exocellular polysaccharides made by the heteropolysaccharide-producing bacterium, Xanthomonas campestris, and other bacteria of the genus, Xanthomonas, in the whole-culture fermentation of a medium comprising a fermentable carbohydrate, a nitrogen source, and other appropriate nutrients, (See, e.g., U.S. Patents 3,433,708 and 4,316,012). Any xanthan gum may be used according to the particular properties and needs of the adhesive system.

Among the properties of the pressure-sensitive adhesive latex which are benefitted by the addition of xanthan gum are viscosity, "pseudoplastic index" (the ratio of viscosity taken at two different shear rates, which may be used to define the ease with which a compound flows across a coating machine pan or the ease with which it may be transferred to a storage tank), the cohesive strength of the adhesive, the shear resistance at ambient temperature, and the shear resistance at elevated temperatures.

The invention is further defined by reference to the following examples, which are intended to be illustrative and not limiting.

#### EXAMPLE 1

Five g of xanthan gum (KELZAN$^R$ S, Kelco Division, Merck & Co., Inc.), which had been slurried with 20 ml of ethylene glycol, was added to 944 g of an acrylic pressure-sensitive adhesive latex (Covinax 234, Franklin Chemical), to which 1 g of NOPCO NDW defoamer had been added, in a Lightnin' mixer at 100 rpm. The speed of agitation was gradually increased up to 800 rpm, as the viscosity of the latex increased. The mixing was continued until viscosity was fully developed and the thickened latex became very smooth without grainy or foamy appearance.

EXAMPLE 2

Following essentially the method of Example 1, xanthan gum is added to a polyacrylic system protected with PVOH (Covinax 287).

EXAMPLE 3

Following essentially the method of Example 1, xanthan gum is added to a polyvinyl acetate acrylate protected with HEC (Covinax 370).

EXAMPLE 4

Following essentially the method of Example 1, xanthan gum is added to a polyvinyl acetate-ethylene protected with PVOH (Flexbond 151 and Flexbond 150).

EXAMPLE 5

Following essentially the method of Example 1, xanthan gum is added to a styrene-butadiene system (Amsco-PSA 6130).

EXAMPLES 6-10

Following essentially the method of Example 1, sodium polyacrylate and hydroxyethyl Cellulose (Cellosize QP-4400, Union Carbide), instead of xanthan gum, are added to the various latexes of Examples 1-5.

## EXAMPLE 11

Comparative data of water-based pressure-sensitive adhesive systems are listed in the following tables.

In preparation for the following tests, the thickened adhesive was coated on mylar film or release liners and air-dried for 72 hours to a thickness of 2 to 2.5 mil. One of the two duplicate samples was air-dried for 72 hours and then cured at 130°C for 15 minutes. The pressure-sensitive adhesive coated film was cut into one inch strips and laminated to mylar film or steel plates for the determination of peel adhesion and shear resistance at room temperature and at elevated temperature.

The Peel Adhesion and Sheer Resistance tests were performed as follows:

1. Peel Adhesion - PSA-coated one inch strip films which were laminated on mylar film and steel plate were tested by peeling back at 180°.
2. Shear Resistance at Room Temperature - PSA-coated one inch strip laminated on steel plate was tested for shear strength at room temperature for 72 hours at a 1 kg constant load.
3. Shear Resistance at Elevated Temperature - PSA-coated one inch strip laminated on steel plate was tested for heat stability by holding for one hour periods at increasing temperatures in the range of 40-150°C at a constant 500 g load.

Table 1 lists the comparative adhesive performances (peel adhesion, shear resistance, and tackiness) for a 100% acrylic latex (COVINAX 234) with KELZAN S, CELLOSIZE QP-4400 and sodium polyacrylate, at 0.5% use level. The addition of KELZAN S to the latex improved its shear resistance at room temperature and at elevated temperature. In addition, KELZAN S improved its adhesion on the mylar film and reduced the undesirable transfer of the adhesive to another substrate. CELLOSIZE QP-4400 did not change the adhesive performance of the latex. The latex sample thickened with sodium polyacrylate gelled overnight and, thus, could not be further tested.

## TABLE 1

### Adhesive Performance (100% Acrylic latex)

| SYSTEM | UNTHICKENED LATEX | LATEX THICKENED WITH KELZAN S | LATEX THICKENED WITH CELLO-SIZE QP-4400 |
|---|---|---|---|
| % Thickener | --- | 0.5 | 0.5 |
| Tackiness | Very Aggressive | Very Aggressive | Very Aggressive |
| Shear Resistance at room temperature | Failed after 5 hours | Failed after 9 hours | Failed after 5 hours |
| at elevated temperature | Failed at 40°C | Failed at 60°C | Failed at 40°C |
| Peel Adhesion on Steel Plate (lb/in) (% of adhesive transferred) | | | |
| Sample dried at room temperature | 6.2 (100%) | 5.9 (50%) | 5.8 (100%) |
| Sample cured at 130°C/15 minutes | 6.3 (100%) | 6.9 (17.5%) | 6.2 (100%) |
| Peel Adhesion on Mylar (lb/in) (% of adhesive transferred) | | | |
| Sample dried at room temperature | 3.6 (100%) | 5.9 (50%) | 4.0 (100%) |
| Sample cured at 130°C/15 minutes | 3.6 (100%) | 5.7 (20%) | 4.3 (100%) |

â

Table 2 lists the comparative adhesive performances (peel adhesion, shear resistance, and tackiness) for a polyvinyl acetate-acrylate latex (COVINAX 370) with KELZAN S, CELLOSIZE QP-4400 and sodium polyacrylate, at 0.3% use level. The addition of KELZAN S did not significantly change the adhesive properties of the latex, which has an excellent balance of peel adhesion, shear resistance and tackiness.

## TABLE 2

### Adhesive Performance (Polyvinyl Acetate-Acrylate Latex)

| SYSTEM | POLYVINYL ACETATE-ACRYLIC LATEX PROTECTED WITH HEC | LATEX THICKENED WITH KELZAN S | LATEX THICKENED WITH CELLOSIZE QP-4400 | LATEX THICKENED WITH SODIUM POLY-ACRYLATE |
|---|---|---|---|---|
| % Thickener | --- | 0.3 | 0.3 | 0.3 |
| Tackiness | Aggressive | Aggressive | Aggressive | Aggressive |
| Shear Resistance | | | | |
| at room temperature | Excellent over 72 hours | Excellent over 72 hours | Excellent over 72 hours | Excellent over 72 hours |
| at elevated temperature | Failed at 130°C | Failed at 130°C | Failed at 130°C | Failed at 130°C |
| Peel Adhesion on Steel Plate (lb/in) (% of adhesive transferred) | | | | |
| Sample dried at room temperature | 12.1 (100%) | 12.7 (100%) | 10.7 (100%) | 10.7 (100%) |
| Sample cured at 130°C/15 minutes | 13.2 (2.5%) | 12.0 (0.5%) | 10.0 (0%) | 10.3 (100%) |
| Peel Adhesion on Mylar (lb/in) (% of adhesive transferred) | | | | |
| Sample dried at room temperature | 8.6 (50%) | 7.6 (30%) | 7.5 (45%) | 8.1 (47.5%) |
| Sample cured at 130°C/15 minutes | 8.6 (50%) | 8.0 (30%) | 8.0 (45%) | 8.4 (45%) |

Table 3 lists the adhesive performance (peel adhesion, shear resistance, and tackiness) for a styrene-butadiene rubber latex (AMSCO-RES-6130 - Union Chemical Co.) thickened with KELZAN S, at 0.5% use level.  The addition of KELZAN S contributed a desirable coating rheology to the SBR latex.  The viscosity for the unthickened latex sample was too low to coat on the substrate.  In a practical application, tackifiers would be used to increase the tackiness of the rubber latex.  Therefore, the improvement should be seen with the addition of xanthan gum when tackifiers are added.

## TABLE 3
### Adhesive Performance (Styrene-Butadiene Rubber Latex)

| SYSTEM | LATEX THICKENED WITH KELZAN S |
|---|---|
| % Thickener | 0.5 |
| Tackiness | Fair Aggressive |
| Shear Resistance | |
| at room temperature | Excellent over 72 hours |
| at elevated temperature | No failure at 150°C |
| Peel Adhesion on Steel Plate (lb/in) (% of adhesive transferred) | |
| Sample dried at room temperature | 4.8 (0%) |
| Sample cured at 130°C/15 minutes | 4.0 (0%) |
| Peel Adhesion on Mylar (lb/in) (% of adhesive transferred) | |
| Sample dried at room temperature | 4.7 (0%) |
| Sample cured at 130°C/15 minutes | 3.8 (0%) |

â

0179628

13

## CLAIMS

1.     A composition comprising a water-based pressure-sensitive adhesive latex and 0.01-2% by weight of xanthan gum, based on the total weight of the latex.

2.     A composition as claimed in Claim 1 comprising 0.1-1% by weight of xanthan gum, based on the total weight of the latex.

3.     A composition as claimed in Claim 1 or 2, in which the water-based pressure-sensitive adhesive latex is polyvinyl acetate-acrylate, polyacrylate, polyvinylacetate-ethylene, styrene-butadiene rubber, or natural rubber latex.